# EUROPEAN PATENT APPLICATION

(11) **EP 4 391 689 A1**
(43) Date of publication of application: **26.06.2024**
(21) Application number: 22858482.7
(22) Date of filing: 17.08.2022
(51) Int. Cl.: H04W 72/20, H04W 28/04

(54) **TERMINAL, WIRELESS COMMUNICATION METHOD, AND BASE STATION**

(30) Priority: 20.08.2021 JP 2021135133
(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/031029
(87) International publication number: WO 2023/022164

(57) **Abstract**

To suitably realize repeated transmission of a PUCCH using a transmission time unit shorter than a slot. A terminal according to an aspect of the present disclosure includes: a receiving section that receives at least one of configuration information concerning a first uplink control channel corresponding to a first transmission period unit and configuration information concerning a second uplink control channel corresponding to a second transmission period unit shorter than the first transmission period unit; and a control section that, when repeated transmission of the second uplink control channel is performed, determines, based on at least one of the configuration information concerning the first uplink control channel and the configuration information concerning the second uplink control channel, an uplink control channel resource used for the repeated transmission.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). The specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In Rel. 16 NR, a user terminal (user terminal or User Equipment (UE)) supports repeated transmission (PUCCH repetition) of a slot-based Physical Uplink Control Channel (PUCCH).

In order to achieve further reduction in a delay (for example, low latency), it is assumed that repeated transmission of a PUCCH using a transmission time unit shorter than a slot is supported.

However, it has not been sufficiently examined how to control the repeated transmission of the PUCCH using the transmission time unit shorter than the slot.

Therefore, an object of the present disclosure is to provide a terminal, a radio communication method, and a base station that can suitably realize repeated transmission of a PUCCH using a transmission time unit shorter than a slot.

### Solution to Problem

A terminal according to an aspect of the present disclosure includes: a receiving section that receives at least one of configuration information concerning a first uplink control channel corresponding to a first transmission period unit and configuration information concerning a second uplink control channel corresponding to a second transmission period unit shorter than the first transmission period unit; and a control section that, when repeated transmission of the second uplink control channel is performed, determines, based on at least one of the configuration information concerning the first uplink control channel and the configuration information concerning the second uplink control channel, an uplink control channel resource used for the repeated transmission.

### Advantageous Effects of Invention

According to the aspect of the present disclosure, it is possible to suitably realize repeated transmission of a PUCCH using a transmission time unit shorter than a slot.

### Brief Description of Drawings

[Fig. 1] Fig. 1 is a diagram illustrating an example of repeated transmission of a slot-based PUCCH.
[Fig. 2] Fig. 2 is a diagram illustrating an example of control of repeated transmission of a slot-based PUCCH in a first embodiment.
[Fig. 3] Fig. 3A and Fig. 3B are diagrams illustrating an example of repeated transmission control of a slot-based PUCCH in a second embodiment.
[Fig. 4] Fig. 4 is a diagram illustrating an example of a schematic configuration of a radio communication system according to an embodiment.
[Fig. 5] Fig. 5 is a diagram illustrating an example of a configuration of a base station according to the embodiment.
[Fig. 6] Fig. 6 is a diagram illustrating an example of a configuration of a user terminal according to the embodiment.
[Fig. 7] Fig. 7 is a diagram illustrating an example of hardware configurations of the base station and the user terminal according to the embodiment.

### Description of Embodiments

Extension of UE feedback for HARQ-ACK has been examined for extension of Industrial Internet of Things (IoT) and ultra-reliable and low latency communication (URLLC).

### (Slot-based PUCCH repetition)

Slot based PUCCH repetition is supported in PUCCH formats 1/3/4 of the Rel. 15/16.

For example, a UE repeatedly performs transmission of an uplink control channel (for example, PUCCH) a certain number of times based on an instruction/setting from a base station (Network (NW) or gNB).

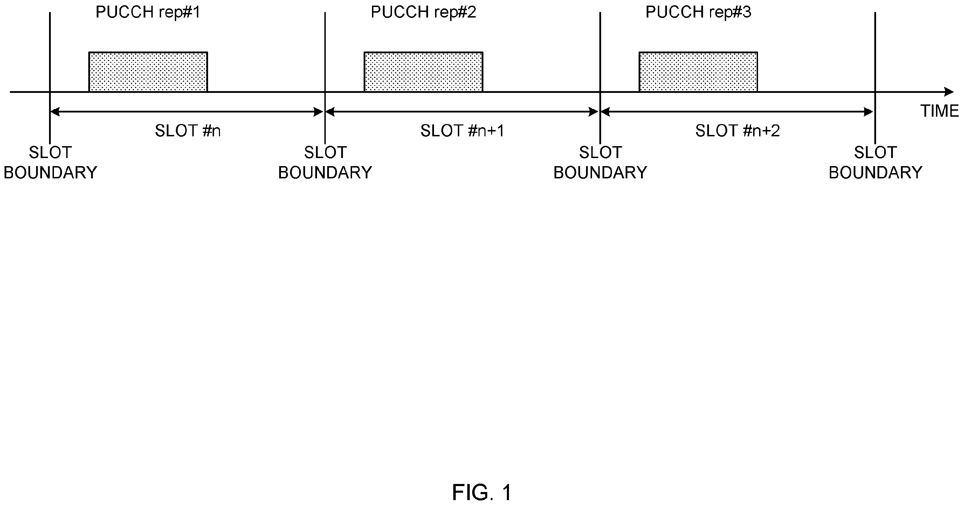

Fig. 1 is a diagram illustrating an example of repeated transmission of a PUCCH. The number of repetitions of the PUCCH may be determined based on information notified from the base station. N-th repetition may also be called n-th transmission occasion or the like.

For example, the UE may receive information indicating the number of repetitions with a higher layer parameter (for example, nrofSlots). may be determined based on. A higher layer parameter (or higher layer signaling) may be, for example, any one of RRC (Radio Resource Control) signaling, MAC (Medium Access Control) signaling, broadcast information, and the like or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

The same symbol allocation may be applied between continuous K slots. Fig. 1 illustrates a case in which PUCCH in each slot is allocated to a certain number of symbols from the head of the slot.

The UE can set the number of PUCCH repetitions N _ PUCCH^repeat for repetition of PUCCH transmission for a PUCCH format 1, 3, or 4 with respective slot number information elements nrofSlots.

When N_PUCCH^repeat>1, the UE follows the following regulations 1-1 to 1-3.

### [Regulation 1-1]

The UE repeats PUCCH transmissions involving UCI over N_PUCCH^repeat slots.

### [Regulation 1-2]

The PUCCH transmissions in each of the N_PUCCH^repeat slots have the same number of continuous symbols. The number of symbols is provided by a number-of-symbols information element nrofsymbols in the PUCCH format 1 information element PUCCH-format 1, a number-of-symbols information element nrofsymbols in the PUCCH format 3 information element PUCCH-format 3, or a number-of-symbols information element nrofsymbols in the PUCCH format 3 information element PUCCH-format 3.

### [Regulation 1-3]

The PUCCH transmissions in each of the N_PUCCH^repeat slots have the same first symbol (start symbol index). The first symbol is provided by a start symbol index information element startingSymbolIndex in the PUCCH format 1 information element PUCCH-format 1, or a start symbol index information element startingSymbolIndex in the PUCCH format 3 information element PUCCH-format 3, or a start symbol index information element startingSymbolIndex in the PUCCH format 3 information element PUCCH-format 3.

### (Sub-slot-based PUCCH transmission)

In the Rel. 16, a sub-slot based HARQ-ACK PUCCH is supported. The length (for example, symbol length/number of symbols) of a sub-slot may be indicated by information (for example, subslotLengthForPUCCH) concerning a sub-slot length included in configuration information of PUCCH (for example, higher layer parameter PUCCH-config). For example, two symbols or seven symbols may be set as the sub slot length. Naturally, the number of symbols is not limited to this.

When the subslotLengthForPUCCH is set, a slot for PUCCH transmission having HARQ-ACK information may include PUCCHs as many as the number of symbols indicated by the subslotLengheForPUCCH.

In Rel. 16, when PUCCH configuration information includes information concerning a sub-slot length, the UE may assume that the PUCCH configuration information does not include a higher layer parameter nrofSlots indicating the number of repetitions (or repeated transmission is not set.).

If two PUCCH configurations PUCCH-Config are provided to the UE, the UE follows the following regulations 2-1 to 2-2.

### [Regulation 2-1]

If a sub-slot length sub-slotLengthForPUCCH is provided to the UE in the first PUCCH-Config, a PUCCH resource for any scheduling request (SR) setting involving a priority level (priority) index of 0 or channel state information (CSI) reporting setting in any PUCCH-Config is present in the sub-slotLengthForPUCCH in the first PUCCH-Config.

### [Regulation 2-2]

If a sub-slot length sub-slotLengthForPUCCH is provided to the UE in the second PUCCH-Config, a PUCCH resource for any scheduling request (SR) setting involving a priority level (priority) index of 1 or channel state information (CSI) reporting setting in any PUCCH-Config is present in the sub-slotLengthForPUCCH in the second PUCCH-Config.

If sub-slotLengthForPUCCH in PUCCH-Config is provided to the UE, the first symbol of the PUCCH resource in PUCCH-Config for multiplexing HARQ-ACKs in the PUCCH transmission is a relative value (represented as a relative value) to the first symbol of the sub-slotLengthForPUCCH symbols. In that remaining cases, the first symbol of the PUCCH resource is a relative value (represented as a relative value) to the first symbol of the slot having N_sym^slot (number of in-slot symbols) symbols.

### (Sub-slot-based PUCCH repetition)

In the Rel. 17, it is studied that sub-slot-based PUCCH repetition is supported. For example, it has been examined that, for a sub-slot-based PUCCH, sub-slot-based PUCCH repetition for HARQ-ACK is supported based on a slot-based PUCCH procedure in the Rel. 16, dynamic repetition indication is also supported for a sub-slot-based PUCCH in the Rel. 17, and PUCCH repetition for PUCCH formats 0 and 2 is supported for sub-slot-based PUCCH repetition.

For extension of PUCCH reliability, it has been examined that multi-TRP intra-slot repetition (multi-TRP intra-slot repetition or Scheme 3) for all PUCCH formats is supported and the same PUCCH resource for carrying UCI is repeated for X=2 (continuous) sub-slots in a slot.

However, it has not been sufficiently examined how to control sub-slot-based repetition. For example, when sub-slot-based PUCCH repetition is performed, how to set/control a sub-slot-based PUCCH repetition condition (for example, which PUCCH configuration information is used) is a problem.

Therefore, the present inventors examined repeated transmission of a PUCCH using a transmission time unit (for example, a sub-slot, a mini slot, a certain number of symbols, or a symbol set) shorter than a slot and conceived the present embodiment. In an aspect of the present disclosure, it is possible to appropriately control PUCCH repetition based on a transmission time unit shorter than a slot.

In the following explanation, embodiments according to the present disclosure are explained in detail with reference to the drawings. Radio communication methods according to the respective embodiments may be applied independently, or may be applied in combination.

In the present disclosure, "A/B" and "at least one of A and B" may be replaced with each other. At least one of A and B may be replaced with A and B. Similarly, in the present disclosure, "A/B/C" and "at least one of A, B and C" may be replaced with each other. At least one of A, B, and C may be replaced with A and B, A and C, or B and C.

Note that, in the present disclosure, activation, deactivation, an instruction (or indicate), selection, configuration, update, determination, and the like may be replaced with one another. In the present disclosure, sequence, list, set, group, and the like may be replaced with one another.

In the following explanation, PUCCH may replaced with PUCCH transmission, PUCCH resource, PUCCH allocation, or PUCCH occasion.

Note that, in the present disclosure, panel, beam, panel group, beam group, uplink (UL) transmission entity, TRP, spatial relationship information (SRI), spatial relationship, control resource set (CONtrol REsource SET (CORESET)), physical downlink shared channel (PDSCH), codeword, base station, certain antenna port (for example, demodulation reference signal (DMRS) port), certain antenna port group (for example, DMRS port group), certain group (for example, Code Division Multiplexing (CDM) group, certain reference signal group, and CORESET group), certain resource (for example, certain reference signal resource), certain resource set (for example, certain reference signal resource set), CORESET pool, PUCCH group (PUCCH resource group), TCI state (DL TCI state), UL TCI state, and the like may be replaced with one another.

Panel identifier (ID) and panel may be replaced with each other. That is, TRP ID and TRP, CORESET group ID and CORESET group, and the like may be replaced with each other. ID and index may be replaced with each other.

### (Radio Communication Method)

### <First Embodiment>

In the first embodiment, a case is explained in which PUCCH repetition based on a transmission time unit shorter than a slot is supported for a PUCCH resource corresponding to configuration information based on the transmission time unit shorter than the slot.

Time unit shorter than slot may be replaced with sub-slot, mini slot, certain number of symbols, or symbol set. In the following explanation, subslot-based PUCCH repetition is explained as an example of the PUCCH repetition based on the transmission time unit shorter than the slot. However, the present disclosure is not limited thereto.

In the present disclosure, a PUCCH resource may be at least one of a PUCCH resource ID, a starting position of a PUCCH (for example, a start symbol), setting of intra-slot frequency hopping (for example, intraSlotFrequencyHopping), a position of a second hop (for example, secondHopPRB), and a PUCCH format. A PUCCH format may include information concerning at least one of a cyclic shift, the number of PUCCH symbols, a start symbol index, and an OCC.

Setting/presence or absence of application of sub-slot based PUCCH repetition (for example, activation/deactivation or enable/disable) may be instructed/set from the base station to the UE. The instruction/setting from the base station to the UE may be performed based on at least one of DCI and higher layer signaling.

For example, in the higher layer signaling, when a first higher layer parameter (for example, nrofSlots/nrofsubslots) concerning a repetition number and a second higher layer parameter (for example, subslotLengthForPUCCH) concerning a sub-slot length are notified/set, the UE may apply sub-slot-based PUCCH repetition. Alternatively, when a certain higher layer parameter indicating the setting of the sub-slot-based PUCCH repetition is notified/set, the UE may apply the sub-slot-based PUCCH repetition.

Alternatively, when setting of the sub-slot-based PUCCH repetition is instructed by the DCI, the UE may perform sub-slot-based PUCCH repetition. In this case, the UE may determine a condition for the sub-slot-based PUCCH repetition based on information notified by the higher layer parameter.

The sub-slot-based PUCCH repetition may be supported only for a PUCCH resource corresponding to configuration information of the sub-slot-based PUCCH. In this case, the PUCCH resource corresponding to the configuration information of the slot-based PUCCH may not be applied to the repetition of the PUCCH corresponding to the sub-slot base. For example, PUCCH resources may be separately set for the sub-slot based PUCCH repetition and other PUCCHs (for example, slot-based PUCCH transmission/sub-slot-based PUCCH transmission).

The configuration information of the sub-slot based PUCCH may be configuration information (for example, subslotLengthForPUCCH) concerning the sub-slot length of the PUCCH included in the slot-based PUCCH configuration information. In this case, the UE may perform the sub-slot-based PUCCH repetition based on a PUCCH resource set to correspond to the configuration information (for example, subslotLengthForPUCCH) concerning the sub-slot length of the PUCCH.

Alternatively, separately from the slot-based PUCCH configuration information (for example, PUCCH-config), PUCCH configuration information (for example, sub-slot based PUCCH-config) for a sub-slot base (or sub-slot based PUCCH repetition) may be set and the PUCCH configuration information for the sub-slot base may include the PUCCH resource/sub-slot length.

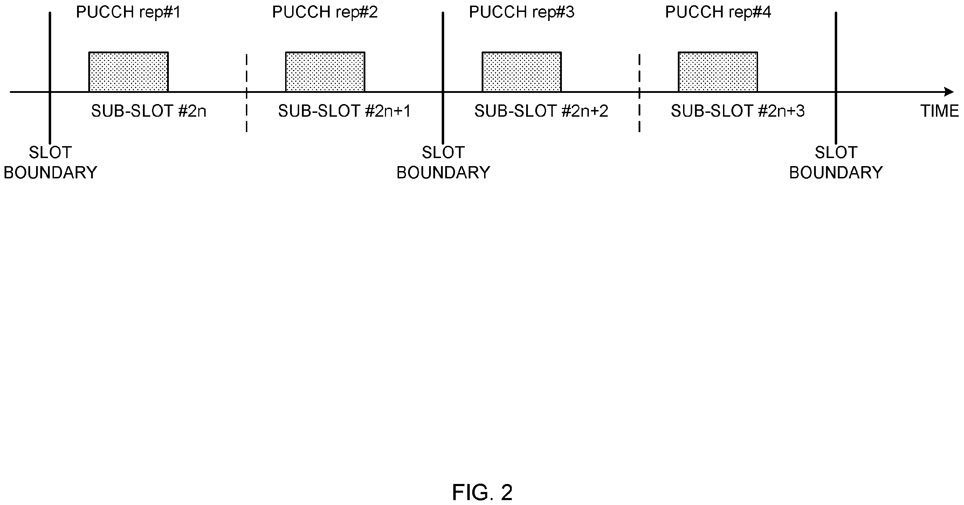

The sub-slot-based PUCCH repetition may be transmitted in sub-slots indicated by the configuration information (for example, subslotLengthForPUCCH) concerning the sub-slot length of the PUCCH (see Fig. 2).

Fig. 2 illustrates an example of the sub-slot-based PUCCH repetition in the case in which the sub-slot length is set to seven symbols (for example, subslotLengthForPUCCH=7) and the number of repetitions is four (for example, nrofSlots/nrofsubslots=4). Here, the UE performs control to perform PUCCH transmission respectively in sub-slots (seven symbols).

The PUCCH allocation (for example, start symbol/symbol length) in the sub-slots may be the same configuration. Alternatively, allocation (for example, start symbol/symbol length) of the PUCCH in the sub-slots may be different configurations.

In this way, since the sub-slot-based PUCCH repetition is supported only for the PUCCH resource of the sub-slot-based PUCCH configuration information (for example, set separately from the PUCCH resource of the slot-based PUCCH configuration information), repetitions in a set/defined sub-slot can be simplified.

### <Second Embodiment>

In a second embodiment, a case is explained in which subslot-based PUCCH repetition is supported for a PUCCH resource corresponding to slot-based PUCCH configuration information/subslot-based PUCCH configuration information.

The sub-slot-based PUCCH repetition may be supported for both of PUCCH resources of slot-based and sub-slot-based PUCCH configuration information (PUCCH-Config). For example, a PUCCH resource may be set in common to the subslot-based PUCCH repetition and other PUCCHs (for example, slot-based PUCCH transmission/sub-slot-based PUCCH transmission).

### <<Sub-slot-based PUCCH configuration information>>

For the sub-slot-based PUCCH configuration information (for example, sub-slot based PUCCH-Config), PUCCH repetition may be performed for each sub-slot indicated/defined by information concerning a sub-slot length (for example, a higher layer parameter subslotLengthForPUCCH).

When PUCCH configuration information (for example, slot-based PUCCH configuration information/subslot-based PUCCH information) includes information concerning a sub-slot length (for example, a higher layer parameter subslotLengthForPUCCH), a UE may perform control to perform PUCCH transmission in sub-slots indicated/defined by the subslotLengthForPUCCH.

### <<Slot-based PUCCH configuration information>>

For the slot-based PUCCH configuration information (for example, slot based PUCCH-Config), PUCCH repetition may be performed for each certain repetition sub-slot. Determination of a PUCCH resource (or a sub-slot) corresponding to the slot-based PUCCH configuration information may be performed when the PUCCH configuration information does not include information concerning a sub-slot length (for example, a higher layer parameter subslotLengthForPUCCH).

The certain repetition sub-slot (repetition sub-slot) may be determined based on at least one of the following options 2-1 to 2-2.

### [Option 2-1]

The certain repetition sub-slot may be included in setting of RRC in the PUCCH configuration information (for example, PUCCH-Config). For example, the certain repetition sub-slot may be included in may be included in the PUCCH configuration information as a certain higher layer parameter (for example, a new higher layer parameter subslotLengthForPUCCHRepetition-r17) for designating a sub-slot length.

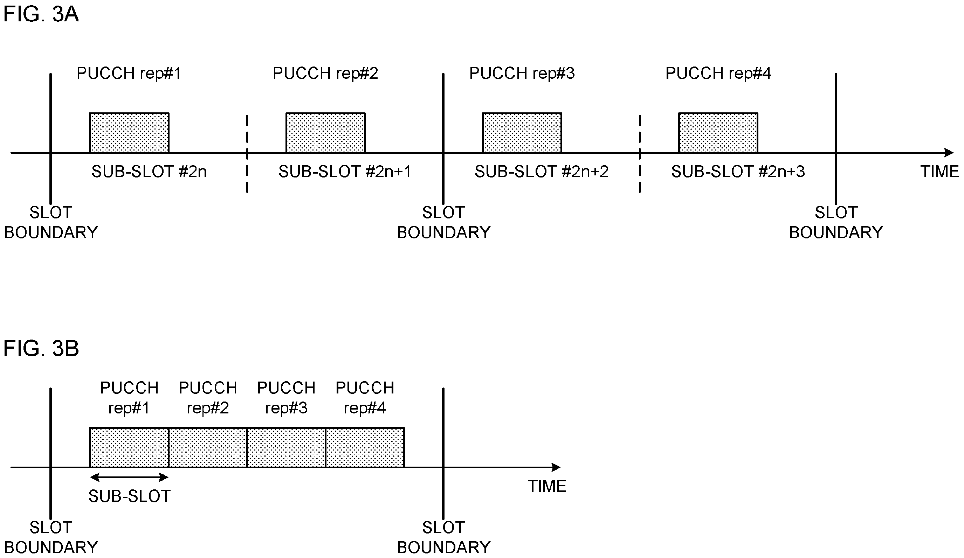

One slot may be divided into certain repetition sub-slots having length indicated by a certain higher layer parameter (see Fig. 3A).

Fig. 3A illustrates an example of the sub-slot-based PUCCH repetition in the case in which the sub-slot length is set to seven symbols (for example, subslotLengthForPUCCHRepetition-r17=7) and the number of repetitions is four (for example, nrofSlots/nrofsublsots=4). Here, the UE performs control to perform PUCCH transmission respectively in sub-slots (seven symbols).

The PUCCH allocation (for example, start symbol/symbol length) in the sub-slots may be the same configuration. Alternatively, allocation (for example, start symbol/symbol length) of the PUCCH in the sub-slots may be different configurations.

A concept of the certain repetition sub-slot (the repetition sub-slot) is similar to the sub-slot related to the length of the sub-slot supported in the Rel. 16 but may be configured to be applied only to the sub-slot-based PUCCH repetition.

Only a PUCCH resource in the certain repetition sub-slot (the repetition sub-slot) may be configured/indicated for the sub-slot-based PUCCH repetition. For example, the UE determines, based on the information (for example, subslotLengthForPUCCH) concerning the length of a first sub-slot included in PUCCH configuration information, a sub-slot condition (for example, length) used for PUCCH transmission. On the other hand, the UE may determine, based on the information (for example, subslotLengthForPUCCHRepetition-r17) concerning the length of a second sub-slot included in the PUCCH configuration information, the sub-slot condition (for example, length) used for sub-slot-based PUCCH repeated transmission.

Note that one of the information concerning the length of the first sub-slot (for example, subslotLengthForPUCCH) and the information concerning the length of the second sub-slot (for example, subslotLengthForPUCCHRepetition-r17) may be set in the UE (or are not set at the same time.). The UE may perform control not to apply the repeated transmission when the information concerning the length of the first sub-slot is set and to apply the sub-slot-based repeated transmission when the information concerning the length of the second sub-slot is set.

### [Option 2-2]

The certain repetition sub-slot may be determined based on the length of the PUCCH (for example, the number of allocated symbols of the PUCCH) (for example, back-to-back PUCCH repetition). The length of the PUCCH may be determined based on a PUCCH resource designated by a higher layer and DCI (for example, the number of PUCCH symbols corresponding to a PUCCH format included in the PUCCH resource). In this case, sub-slot-based PUCCH repetitions may be performed in continuous symbols (see Fig 3B).

Fig. 3B illustrates a case in which a plurality of PUCCH transmissions are performed in continuous symbols based on the length of the PUCCH (length of PUCCH) in one slot.

By using the configuration explained in the second embodiment, it is possible to flexibly cope with a case in which in-slot PUCCH repeated transmission to a multi-TRP (for example, MTRP) is supported.

<UE capability information>

In the first and second embodiments, the following UE capabilities may be set: Note that the following UE capabilities may be replaced with parameters (for example, higher layer parameters) set for a UE from a network (for example, a base station).

UE capability information concerning whether to support the sub-slot-based PUCCH repetition may be defined.

UE capability information concerning whether to support the sub-slot-based PUCCH repetition for resources of a slot-based PUCCH configuration (PUCCH-Confiig) may be defined.

The first to second embodiments may be configured to be applied to a UE that supports/reports at least one of the UE capabilities explained above. Alternatively, the first to second embodiments may be configured to be applied to a UE set from a network.

Note that which of the control methods explained in at least one of the first and second embodiments is applied may be notified/set to the UE by a higher layer parameter. Alternatively, the UE may report the control method as capability information (for example, UE capability).

### (Radio communication system)

In the following explanation, a configuration of a radio communication system according to one embodiment of the present disclosure is explained. In this radio communication system, communication is performed by using any one of or a combination of the radio communication methods according to the above-described embodiments of the present disclosure.

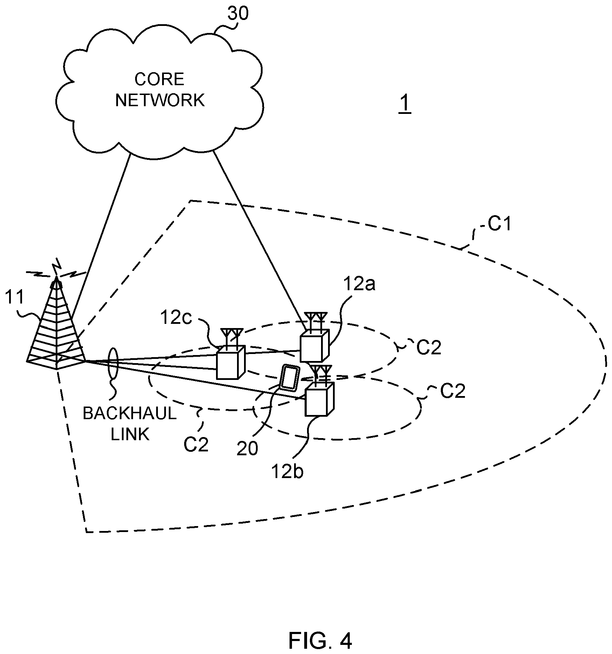

Fig. 4 is a diagram illustrating an example of a schematic configuration of the radio communication system according to the embodiment. A radio communication system 1 may be a system that implements communication using long term evolution (LTE), 5th generation mobile communication system New Radio (5G NR), and the like drafted as the specification by third generation partnership project (3GPP).

The radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a Macro cell C1 with a relatively wide coverage, and base stations 12 (12a to 12c) disposed in the Macro cell C1, each of which forms a Small cell C2 narrower than the Macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as a "base station 10", unless these base stations are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that frequency ranges, definitions, or the like of the FR1 and FR2 are not limited to these, and, for example, the FR1 may correspond to a higher frequency range than the FR2.

The user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user equipment 20 may be a terminal corresponding to at least one of communication methods such as LTE, LTE-A, or 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

A radio access method may also be referred to as a waveform. Note that, in the radio communication system 1, another radio access method (for example, another single carrier transmission method or another multi-carrier transmission method) may be used as a radio access method for the UL or the DL.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The PUSCH may transmit the user data, higher layer control information, and the like. A master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that DCI that schedules a PDSCH may also be referred to as DL assignment, DL DCI, or the like, and DCI that schedules a PUSCH may also be referred to as a UL grant, UL DCI, or the like. Note that a PDSCH may be replaced with DL data, and a PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor a CORESET associated with a certain Search Space on the basis of a Search Space configuration.

One search space may correspond to a PDCCH candidate corresponding to one or more aggregation levels. One or more search spaces may be referred to as a search space set. Note that "Search Space", "Search Space set", "Search Space configuration", "Search Space set configuration", "CORESET", "CORESET configuration", and the like in the present disclosure may be replaced with one another.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, or the like may be expressed without "link". Furthermore, various channels may be expressed without adding "Physical" to the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

In the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

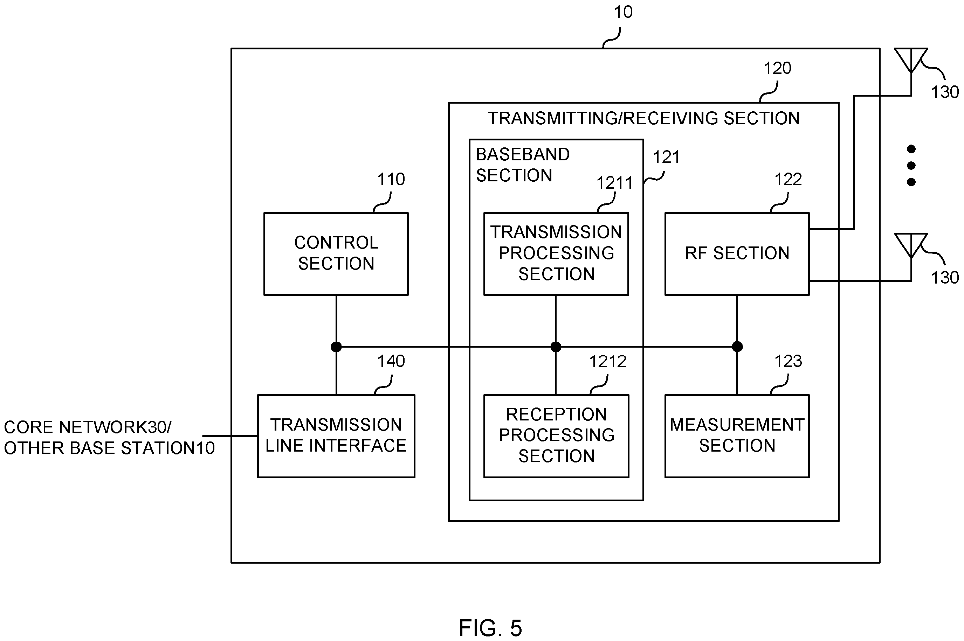

Fig. 5 is a diagram illustrating an example of a configuration of the base station according to the embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that, although this example mainly describes a functional block which is a characteristic part of the present embodiment, the base station 10 may be assumed also to have another functional block that is necessary for radio communication. Part of processing of each unit described below may be omitted.

The control section 110 controls an entire base station 10. The control section 110 can include a controller, a control circuit, or the like, which is described on the basis of common recognition in a technical field according to the present disclosure.

The control section 110 may control signal generation, scheduling (for example, resource allocation or mapping), or the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of a state of the base station 10, management of a radio resource, or the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, or the like, which is described on the basis of common recognition in a technical field according to the present disclosure.

The transmitting/receiving section 120 may be constituted as an integrated transmitting/receiving section, or may be constituted by a transmitting unit and a reception unit. The transmitting section may include the transmission processing section 1211 and the RF section 122. The reception unit may include the reception processing section 1212, the RF unit 122, and the measurement section 123.

The transmission/reception antenna 130 can include an antenna, for example, an array antenna, or the like, which is described on the basis of common recognition in a technical field according to the present disclosure.

The transmitting/receiving section 120 may transmit the above-described downlink channel, synchronization signal, Downlink Reference Signal, or the like. The transmitting/receiving section 120 may receive the above-described uplink channel, Uplink Reference Signal, or the like.

The transmitting/receiving section 120 may form at least either a transmission beam or a reception beam by using digital beam forming (for example, precoding), analog beam forming (for example, phase rotation), or the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF unit 122) may perform modulation to a radio frequency range, filtering processing, amplification, or the like on the baseband signal, and may transmit a signal in the radio frequency band via the transmission/reception antenna 130.

Meanwhile, the transmitting/receiving section 120 (RF unit 122) may perform amplification, filtering processing, demodulation to a baseband signal, or the like on the signal in the radio frequency range received by the transmission/reception antenna 130.

The transmitting/receiving section 120 (reception processing section 1212) may apply reception processing such as analog-digital conversion, fast fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, or the like, and may acquire, transmit, or the like user data (user plane data), control plane data, or the like for the user equipment 20.

Note that a transmitting unit and reception unit of the base station 10 in the present disclosure may include at least one of the transmitting/receiving section 120, the transmission/reception antenna 130, or the transmission line interface 140.

The transmitting/receiving section 120 may transmit, to a terminal, at least one of configuration information concerning a first uplink control channel corresponding to a first transmission period unit and configuration information concerning a second uplink control channel corresponding to a second transmission period unit shorter than the first transmission period unit.

When the terminal performs repeated transmission of the second uplink control channel, the control section 110 may control reception of the repeated transmission based on an uplink control channel resource determined based on at least one of configuration information concerning the first uplink control channel and configuration information concerning the second uplink control channel.

### (User Terminal)

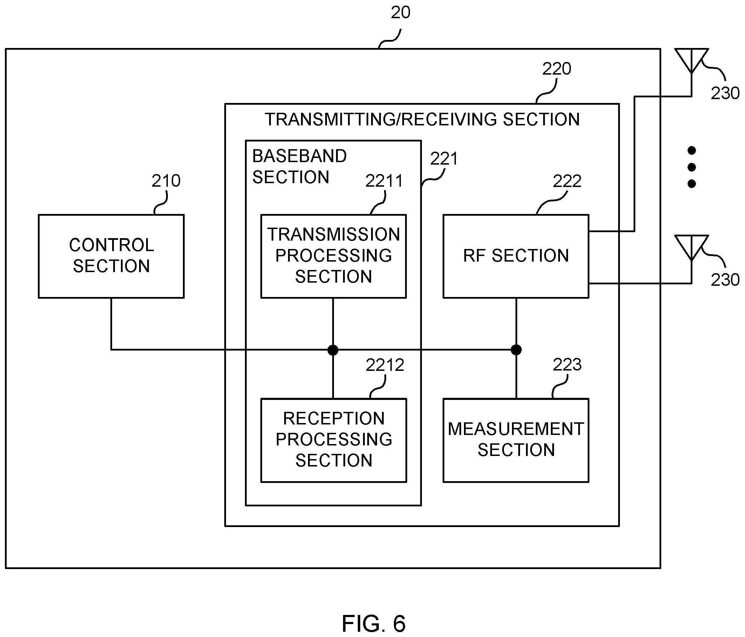

Fig. 6 is a diagram illustrating an example of a configuration of the user terminal according to the embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. Part of processing of each unit described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

Note that whether to apply DFT processing may be determined based on setting of transform precoding. In a case in which transform precoding is enabled for a certain channel (e.g., PUSCH), the transmitting/receiving section 220 (transmission processing section 2211) may perform DFT processing as the transmission processing in order to transmit the channel using a DFT-s-OFDM waveform. In a case in which it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive at least one of configuration information concerning a first uplink control channel corresponding to a first transmission period unit and configuration information concerning a second uplink control channel corresponding to a second transmission period unit shorter than the first transmission period unit.

When performing repeated transmission of the second uplink control channel, the control section 210 may determine an uplink control channel resource used for repeated transmission based on at least one of the configuration information concerning the first uplink control channel and the configuration information concerning the second uplink control channel.

Information concerning the uplink control channel resource used for the repeated transmission of the second uplink control channel may be set in association with information indicating the second transmission period unit.

The control section 210 may control the repeated transmission of the second uplink control channel based on the information indicating the second transmission period unit for the repeated transmission set separately from the information indicating the second transmission period unit.

The control section 210 may determine the uplink control channel resource used for the repeated transmission based on the length of the second uplink control channel on which the repeated transmission is performed.

### (Hardware Configuration)

Note that the block diagrams that have been used to describe the above embodiments illustrate blocks in functional units. These functional blocks (components) may be implemented in arbitrary combinations of at least one of hardware or software. The method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

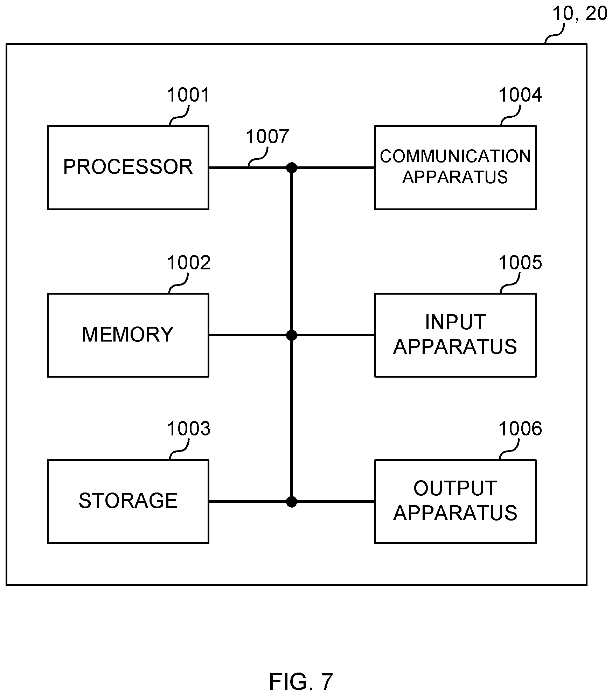

For example, the base station, the user terminal, and the like according to one embodiment of the present disclosure may function as a computer that executes the processing of the radio communication method of the present disclosure. Fig. 7 is a diagram illustrating an example of hardware configurations of the base station and the user terminal according to the embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, terms such as apparatus, circuit, device, section, and unit can be replaced with one another. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. The processing may be executed by one processor, or the processing may be executed by two or more processors simultaneously or sequentially, or using other methods. Note that the processor 1001 may be implemented with one or more chips.

Each function of the base station 10 and the user terminal 20 is implemented by certain software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM)), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, or a light emitting diode (LED) lamp). Note that the input apparatus 1005 and the output apparatus 1006 may be provided in an integrated structure (for example, a touch panel).

These apparatuses such as the processor 1001 and the memory 1002 are connected by the bus 1007 so as to communicate information. The bus 1007 may be formed with a single bus, or may be formed with buses that vary between pieces of apparatus (between apparatus).

The base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware (these hardware).

### (Variations)

Note that terms described in the present disclosure and terms necessary for understanding the present disclosure may be replaced with terms that have the same or similar meanings. For example, channel, symbol, and signal (signal or signaling) may be replaced with one another. The signal may be a message. The reference signal can be abbreviated as an RS, and may be referred to as a pilot, a pilot signal, and the like, depending on which standard applies. A component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. The subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. The mini slot may be referred to as a sub-slot. Each mini slot may include fewer symbols than the slot. PDSCH (or PUSCH) transmitted in a time unit larger than the mini slot may be referred to as "PDSCH (PUSCH) mapping type A". PDSCH (or PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as frame, subframe, slot, mini slot, and symbol in the present disclosure may be replaced with one another.

For example, one subframe may be referred to as TTI, a plurality of continuous subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and so on, instead of a "subframe."

Here, a TTI refers to, for example, the minimum time unit of scheduling in radio communication. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. When the TTI is given, a time interval (e.g., the number of symbols) to which a transport block, a code block, a codeword, or the like is actually mapped may be shorter than the TTI.

Note that, when one slot or one mini slot is called "TTI," one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a sub-slot, a slot, or the like.

Note that long TTI (for example, normal TTI, or subframe) may be replaced with TTI having time duration exceeding 1 ms and short TTI (for example, shortened TTI) may be replaced with TTI having TTI duration less than the TTI duration of long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology and may be, for example, twelve. The number of subcarriers included in an RB may be determined based on a numerology.

Also, an RB may include one or more symbols in the time domain, and may be one slot, one mini slot, one subframe or one TTI in length. One TTI, one subframe, etc. may each be comprised of one or more resource blocks.

Note that one or more RBs may be referred to as a physical resource block (PRB), a sub-carrier group (SCG), a resource element group (REG), a PRB pair, an RB pair, and the like.

A resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be set within one carrier.

At least one of the set BWPs may be active, and the UE does not have to expect transmission/reception of a certain signal/channel outside the active BWP. Note that "cell", "carrier", etc. in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to certain values, or may be represented using other corresponding information. For example, a radio resource may be indicated by a certain index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instruction, command, information, signal, bit, symbol and chip, all of which may be referenced throughout the herein-contained description, may be represented by voltages, currents, electromagnetic waves, magnetic fields or particles, optical fields or photons, or any combination of these.

Information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus (other apparatus).

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. The RRC signaling may be referred to as an RRC message, and may be, for example, an RRC connection setup message, an RRC connection reconfiguration message, and the like. Notification of the MAC signaling may be performed using, for example, an MAC control element (CE).

Also, reporting of certain information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a certain value).

Software, whether being called "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a radio technology (infrared rays, microwaves, and the like), at least one of the wired technology or the radio technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be called a term such as macro cell, small cell, femto cell, or pico cell.

The base station can accommodate one or more (for example, three) cells. In a case in which the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station is sometimes called "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

At least one of the base station or the mobile station may be called transmitting apparatus, receiving apparatus, radio communication apparatus, and the like. Note that at least one of the base station or the mobile station may be a device mounted on a moving object, a moving object itself, and the like. The moving object may be a transportation (for example, a car or an airplane), an unmanned moving object (for example, a drone or an autonomous car), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Base station in the present disclosure may be replaced with user terminal. For example, each aspect/embodiment of the present disclosure may be applied to a configuration in which communication between the base station and the user terminal is replaced with communication among a plurality of user terminals (which may be referred to as, for example, device-to-device (D2D) or vehicle-to-everything (V2X)). In this case, the user terminal 20 may have the function of the above-described base station 10. Words such as "uplink" and "downlink" may be replaced with words corresponding to terminal-to-terminal communication (for example, "side link"). For example, uplink channel, downlink channel, and the like may be replaced with side link channel.

Likewise, user terminal in the present disclosure may be replaced with base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. The order of processing procedures, sequences, flowcharts, and the like of the aspects/embodiments described in the present disclosure may be reordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. A plurality of systems may be combined and applied (for example, a combination of LTE or LTE-A and 5G).

The phrase "based on" used as in the present disclosure does not mean "based only on," unless otherwise specified. In other words, the phrase "based on" means both "based only on" and "based at least on."

Reference to elements with designations such as "first," "second," and the like as used in the present disclosure does not generally limit the number/quantity or order of these elements. These designations can be used in the present disclosure, as a convenient way of distinguishing between two or more elements. Consequently, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

To "judge" and "determine" as used in the present disclosure may be interpreted to mean making judgements and determinations related to receiving (for example, receiving information), transmitting (for example, transmitting information), inputting, outputting, accessing (for example, accessing data in memory), and the like.

To "judge" and "determine" as used in the present disclosure may be interpreted to mean making judgements and determinations related to resolving, selecting, choosing, establishing, comparing, and the like. In other words, to "judge" and "determine" as used in the present disclosure may be interpreted to mean making judgements and determinations related to some action.

"Judgment (determination)" may be interpreted as "assuming," "expecting," "considering," or the like.

The term "maximum transmission power" described in the present disclosure may mean the maximum value of transmission power, the nominal UE maximum transmit power, or the rated UE maximum transmit power.

As used in the present disclosure, the terms "connected" and "coupled," or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the phrase may mean that "A and B are different from C". The terms such as "separated", "coupled", and the like may be similarly interpreted as "different".

When terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

In the above, the invention according to the present disclosure has been described in detail; however, it is obvious to those skilled in the art that the invention according to the present disclosure is not limited to the embodiments described in the present disclosure. The invention according to the present disclosure can be implemented as corrected and changed aspects without departing from the gist and the scope of the invention decided by the descriptions of claims. Consequently, the description of the present disclosure is provided only for the purpose of explaining examples, and should by no means be construed to limit the invention according to the present disclosure in any way.

The present application is based on Japanese Patent Application No. 2021 -135133 filed on August 20, 2021. All the contents of the present application are incorporated herein.

## Claims

1. A terminal comprising:
a receiving section that receives at least one of configuration information concerning a first uplink control channel corresponding to a first transmission period unit and configuration information concerning a second uplink control channel corresponding to a second transmission period unit shorter than the first transmission period unit; and
a control section that, when repeated transmission of the second uplink control channel is performed, determines, based on at least one of the configuration information concerning the first uplink control channel and the configuration information concerning the second uplink control channel, an uplink control channel resource used for the repeated transmission.

2. The terminal according to claim 1, wherein information concerning the uplink control channel resource used for the repeated transmission of the second uplink control channel is set in association with information indicating the second transmission period unit.

3. The terminal according to claim 1, wherein the control section controls the repeated transmission of the second uplink control channel based on information indicating the second transmission period unit for repeated transmission set separately from information indicating the second transmission period unit.

4. The terminal according to claim 1, wherein the control section determines, based on length of the second uplink control channel on which the repeated transmission is performed, an uplink control channel resource used for the repeated transmission.

5. A radio communication method for a terminal comprising:
receiving at least one of configuration information concerning a first uplink control channel corresponding to a first transmission period unit and configuration information concerning a second uplink control channel corresponding to a second transmission period unit shorter than the first transmission period unit; and
determining, when repeated transmission of the second uplink control channel is performed, based on at least one of the configuration information concerning the first uplink control channel and the configuration information concerning the second uplink control channel, an uplink control channel resource used for the repeated transmission.

6. A base station comprising:
a transmitting section that transmits, to a terminal, at least one of configuration information concerning a first uplink control channel corresponding to a first transmission period unit and configuration information concerning a second uplink control channel corresponding to a second transmission period unit shorter than the first transmission period unit; and
a control section that, when the terminal performs repeated transmission of the second uplink control channel, controls reception of the repeated transmission based on an uplink control channel resource determined based on at least one of configuration information concerning the first uplink control channel and configuration information concerning the second uplink control channel.
